(19) Europäisches Patentamt
European Patent Office
Office européen des brevets

(11) **EP 4 224 380 A1**

(12) **EUROPEAN PATENT APPLICATION**
published in accordance with Art. 153(4) EPC

(43) Date of publication:
**09.08.2023 Bulletin 2023/32**

(21) Application number: **21874833.3**

(22) Date of filing: **22.06.2021**

(51) International Patent Classification (IPC):
**G06Q 10/00** (2023.01)   **G05B 23/02** (2006.01)
**G06Q 10/04** (2023.01)

(52) Cooperative Patent Classification (CPC):
**G05B 23/02; G06Q 10/00; G06Q 10/04**

(86) International application number:
**PCT/JP2021/023510**

(87) International publication number:
**WO 2022/070529 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020  JP 2020162925**

(71) Applicant: **Hitachi, Ltd.**
**Tokyo 100-8280 (JP)**

(72) Inventors:
• **UEKI Yosuke**
  **Tokyo 100-8280 (JP)**
• **SHINGE Takahide**
  **Tokyo 100-8280 (JP)**
• **NISHIKAWA Genta**
  **Tokyo 100-8280 (JP)**
• **AMIMOTO Kaoru**
  **Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **MAINTENANCE SIMULATION DEVICE AND MAINTENANCE SIMULATION METHOD**

(57)    A maintenance strategy presentation device (1) includes: a simulation unit (50) configured to calculate a current reliability index by inputting a cumulative damage obtained based on a predicted value of operation data of a maintenance object to a life model defining a reliability index for each cumulative damage of the maintenance object, and determine, in each period, whether preventive maintenance is to be executed in the current reliability index according to a magnitude relationship between the current reliability index and a reliability index of an execution reference parameter (91) ; an optimization calculation unit (70) configured to evaluate simulation result data (51) output by the simulation unit (50) using a predetermined evaluation index, and update the execution reference parameter (91) so as to optimize an evaluation result of the simulation result data (51); and a display control unit (80) configured to display the simulation result data (51) or the evaluation result of the simulation result data (51) on a display device.

[FIG. 1]

EP 4 224 380 A1

**Description**

Technical Field

The present invention relates to a maintenance simulation apparatus and a maintenance simulation method.

Background Art

In a mechanical system such as a power generation device or a transportation device, in order to normally exhibit a predetermined function of the system, it is important to execute maintenance work such as repair or replacement of each component at an appropriate timing. A maintenance timing is often determined according to a life of each component.

PTL 1 and NPL 1 describe that a reliability index indicating a probability of a failure occurrence is presented based on a reflection of an operation state of a device until a present time. The reliability index is, for example, a failure rate indicating the number of times of failures per unit time or a failure probability obtained by integrating the failure rate. The reliability index is obtained by statistically analyzing records of failures occurred in the past or operation data of the mechanical system.

Therefore, when preventive maintenance is performed before a failure occurs based on information on the reliability index, it is possible to effectively prevent an occurrence of a sudden failure.

PTL 2 describes that a simulation utilizing a life model in NPL 1 is performed using a model, which assumes a Weibull distribution as a life distribution of a maintenance target.

Citation List

Patent Literature

PTL 1: JP2019-160128A
PTL 2: JP2004-323162A

Non Patent Literature

NPL 1: Yosuke Ueki et al., "Lifetime modelling for mechanical equipment by utilizing time-series data based-on the damage-based survival analysis (A trial for applying the model to the equipment in a chemical plant)", Transactions of the Japan Society of Mechanical Engineers, Vol. 86, No. 886, 2020, p. 20-00042

Summary of Invention

Technical Problem

When a component still having a sufficient life is replaced earlier as preventive maintenance, a cost of the component increases. On the other hand, when the component is overused until an end of life, a failure of the component occurs, which leads to a huge loss in post maintenance.

That is, in order to appropriately set an execution reference of maintenance regarding how to distribute the preventive maintenance for replacement before the component actually fails and the post maintenance for replacement after the component fails, it is necessary to obtain a life model of each component with high accuracy in a simulation of a maintenance plan.

However, in the methods of PTL 1 and NPL 1, it is only limited to obtain the reliability index, which does not correspond to the simulation of the maintenance plan. Therefore, in order to determine at which timing the preventive maintenance is most effectively executed, a trial in an actual operation is required.

In the simulation of the maintenance plan in PTL 2, the number of times of post replacement and the number of times of preventive replacement are respectively obtained. However, since it is not possible to consider magnitude of load (damage) of the component to be maintained, it cannot be said that the life model of each component is sufficiently accurate.

Even though components of the same model number are operated for the same period, lives of the components may also greatly vary depending on an operation status of each component. For example, a component installed outdoors is more deteriorated than an indoor component. Even in components of a wind power generation system, deterioration varies between a component in an area with a large amount of strong winds and a component in an area with a small amount of wind. Further, even for operations in the same two months, deterioration varies between an operation period in warm spring and an operation period in severe winter.

That is, it is required that the life model of each component input for the simulation of the maintenance plan is not a low-accuracy model in which a model number or an operation period of the component are roughly designated, but a high-accuracy model that reflects the operation status of each component.

Therefore, a main object of the invention is to perform a simulation of a maintenance plan with high accuracy according to an operation status of each component.

Solution to Problem

In order to solve the above problems, a maintenance simulation apparatus according to the invention has the following features.

According to the invention, a maintenance simulation apparatus includes: a simulation unit configured to calculate a current reliability index by inputting a cumulative damage obtained based on a predicted value of operation data of a maintenance object to a life model defining a reliability index for each cumulative damage of the maintenance object, and determine, in each period, whether preventive maintenance is to be executed in the current reliability index according to a magnitude relationship between the current reliability index and a reliability index of an execution reference parameter; an optimization calculation unit configured to evaluate simulation result data output by the simulation unit using a predetermined evaluation index, and update the execution reference parameter so as to optimize an evaluation result of the simulation result data; and a display control unit configured to display the simulation result data or the evaluation result of the simulation result data on a display device.

Other units will be described later.

Advantageous Effects of Invention

According to the invention, it is possible to perform a simulation of a maintenance plan with high accuracy according to an operation status of each component.

Brief Description of Drawings

[FIG. 1] FIG. 1 is a configuration diagram of a maintenance strategy presentation device according to the present embodiment.
[FIG. 2] FIG. 2 is a configuration diagram of hardware by which the maintenance strategy presentation device in FIG. 1 operates according to the present embodiment.
[FIG. 3] FIG. 3 shows a life model generated by a life model generation unit according to the present embodiment.
[FIG. 4] FIG. 4 is a flowchart showing a process executed by a simulation unit according to the present embodiment.
[FIG. 5] FIG. 5 is a configuration diagram of a maintenance strategy presentation device according to Embodiment 2 of the present embodiment.
[FIG. 6] FIG. 6 is a time-series display example in one of simulation cases in which simulation is performed a plurality of times according to the present embodiment.
[FIG. 7] FIG. 7 is a display example of optimization strategy information according to the present embodiment.
[FIG. 8] FIG. 8 is a configuration diagram of a maintenance strategy presentation device according to Embodiment 3 of the present embodiment.

Description of Embodiments

Hereinafter, Embodiment 1 to Embodiment 3 will be described sequentially with reference to the drawings.

Embodiment 1

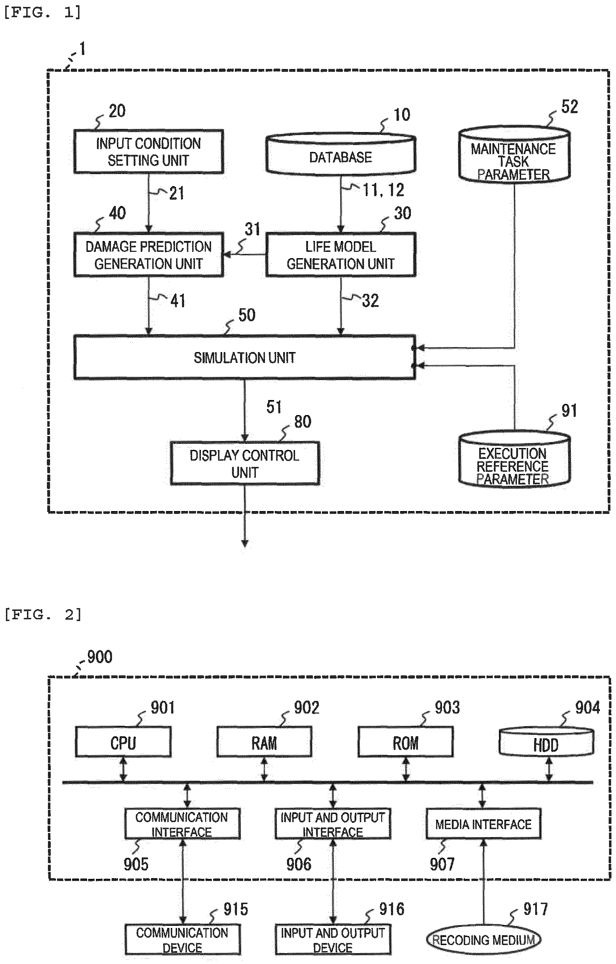

FIG. 1 is a configuration diagram of a maintenance strategy presentation device 1.

The maintenance strategy presentation device 1 includes, as processing units, an input condition setting unit 20, a life model generation unit 30, a damage prediction generation unit 40, a simulation unit 50, an evaluation index calculation unit 60, an optimization calculation unit 70, and a display control unit 80.

A storage unit of the maintenance strategy presentation device 1 stores a database 10, maintenance cost data 65, and an optimization parameter 90.

The database 10 stores failure maintenance event data 12 and time-series operation data 11.

The failure maintenance event data 12 is data showing an individual device in which a failure occurs and a failure occurrence time. Here, a failure event is an event related to the failure such as "malfunction", "abnormality", or "component replacement".

The time-series operation data 11 is, for example, numerical data indicating a change in a physical quantity measured by a sensor, and a warning history of an alarm or an error may also be treated as the time-series operation data 11.

The life model generation unit 30 uses the failure maintenance event data 12 and the time-series operation data 11 in the past to construct a model (hereinafter, referred to as a life model) that probabilistically defines a life until a failure occurs in a maintenance target.

FIG. 2 is a configuration diagram of hardware by which the maintenance strategy presentation device 1 in FIG. 1 operates.

The maintenance strategy presentation device 1 is implemented by a computer 900 including a CPU 901, a RAM 902, a ROM 903, an HDD 904, a communication interface 905, an input and output interface 906, and a media interface 907.

The communication interface 905 is connected to an external communication device 915. The input and output interface 906 is connected to an input and output device 916. The media interface 907 reads and writes data from and to a recording medium 917. Further, the CPU 901 controls each processing unit by executing a program (also referred to as an application or an app as an abbreviation of the application) read into the RAM 902. The program can also be distributed via a communication line, or can be recorded in the recording medium 917 such as a CD-ROM and distributed.

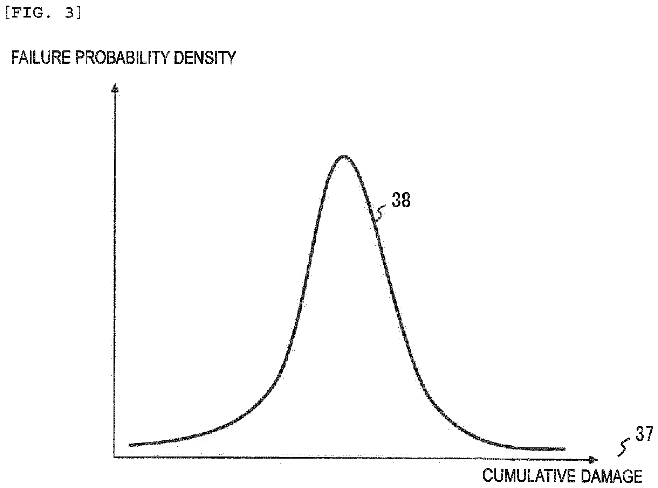

FIG. 3 shows a life model generated by the life model generation unit 30.

The life model in FIG. 3 includes a damage model 31 and a failure probability function 32 in FIG. 1 as elements. The life model generation unit 30 outputs the damage model 31 to the damage prediction generation unit 40 and outputs the failure probability function 32 to the simulation unit 50.

The damage model 31 is a function for calculating cumulative damage 37 based on operation prediction data 21. Alternatively, the damage model 31 is a formula for converting the time-series operation data 11 into the cumulative damage 37.

A curve 38 in FIG. 3 shows an example of a shape of the failure probability function 32.

When it is assumed that the cumulative damage 37 expressed as a cumulative load on the maintenance target is a random variable, the life model is a model in which a distribution of life at this time is a probability distribution.

Here, the cumulative damage 37 is a virtual amount expressed as a function of the time-series operation data 11. The life model can be generated by, for example, a method based on survival time analysis described in PTL 1 or NPL 1.

In this manner, a horizontal axis of the life model is not set as a time axis (operation time) but as the cumulative damage 37 which is a result of operation for the operation time in various operation environments, thereby improving accuracy of the life model input to the simulation unit 50.

For example, the cumulative damage 37 of a component installed outdoors for two months is greater than the cumulative damage 37 of the component installed indoors for two months. Similarly, the cumulative damage 37 of a component installed in winter for two months is greater than the cumulative damage 37 of the component installed in spring for two months.

In order to cause a failure to occur on a computer using the life model, damage prediction data per unit time (unit time damage prediction data 41) in a simulation period is input to the simulation unit 50. The cumulative damage 37 is a value obtained by integrating the unit time damage prediction data 41 in a time direction.

At this time, in a method for directly inputting the unit time damage prediction data 41 to the simulation unit 50, since the damage here is a virtual amount, it may be difficult to directly give a predicted value of the damage.

Therefore, the input condition setting unit 20 gives a predicted value of the time-series operation data, as the operation prediction data 21, to the damage prediction generation unit 40. The damage prediction generation unit 40 generates the unit time damage prediction data 41 based on the operation prediction data 21 and the damage model 31.

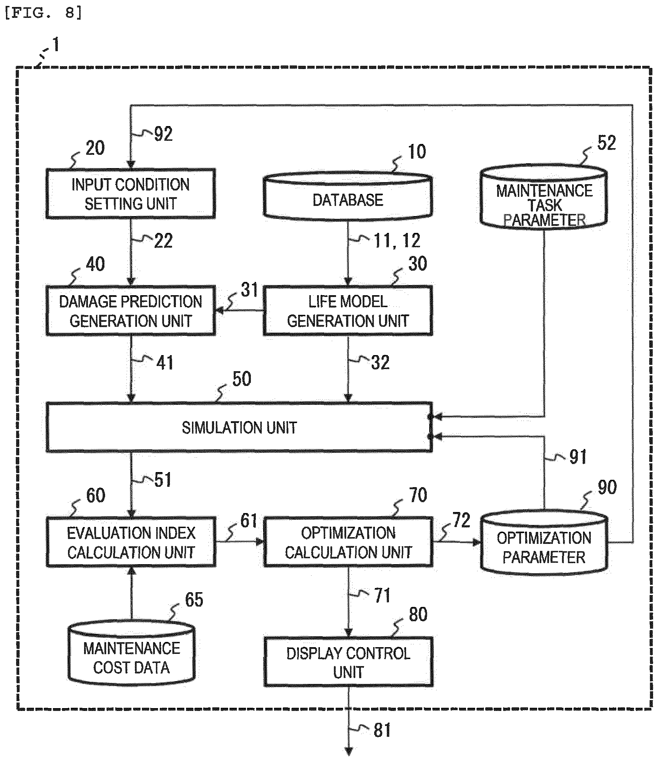

Alternatively, a method may be used in which the damage prediction generation unit 40 takes uncertainties in the unit time damage prediction data 41 or the operation prediction data 21 into consideration. For example, the input condition setting unit 20 adds a parameter (for example, variance) that indicates an uncertainty to the operation prediction data 21 in addition to an average value. Then, the damage prediction generation unit 40 adds noise to the unit time damage prediction data 41 using a random number. Accordingly, it is possible to cause the simulation unit 50 in a subsequent stage to consider an uncertainty (for example, ambiguity of operation plan data 92 in FIG. 8) in damage prediction or operation prediction.

The simulation unit 50 executes a failure simulation and a maintenance simulation (hereinafter, referred to as a failure maintenance simulation). Therefore, the simulation unit 50 sets any period in advance, and reproduces an occurrence status of a failure or maintenance during the period on the computer. The simulation unit 50 utilizes the life model in FIG. 3 in order to estimate the occurrence status of the failure or the maintenance in a target in which damage to the maintenance target varies constantly according to an operation state.

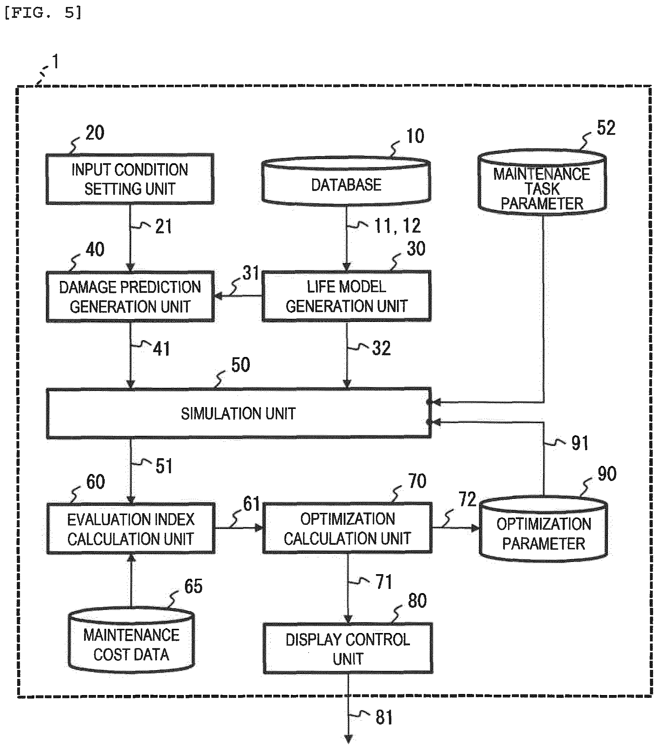

By presenting an appropriate maintenance strategy (optimization strategy information 81 in FIG. 5), the simulation unit 50 can maximize an effect of performing preventive maintenance based on a reliability index even for a device such as a wind power generator, which is damaged differently for each individual device or in each period.

The reliability index is, for example, a "failure rate" indicating a ratio in which a device, which does not break down until a present time, breaks down within a next unit time, or a "cumulative failure probability" indicating a probability in which the device breaks down until the present time. Since these reliability indexes are indexes in general reliability engineering, a maintenance worker is allowed to easily understand that these indexes form a condition under which how much failure is expected to occur.

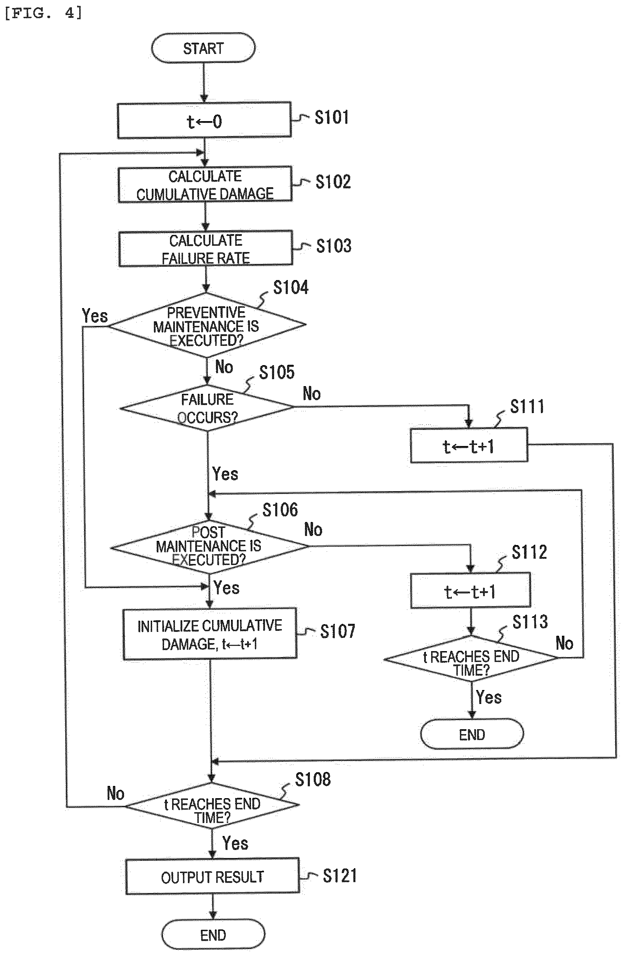

FIG. 4 is a flowchart showing a process executed by the simulation unit 50.

In this flowchart, the simulation unit 50 divides a target period of a simulation into periods t (t = 0, 1, 2, ...), each of which is any unit time step, and simulates statuses of a failure occurrence or a maintenance execution while incrementing the period t.

In S101, the simulation unit 50 initializes the period t to a value of 0.

In S102, the simulation unit 50 calculates the cumulative damage 37 (FIG. 3) until the present time using the unit time damage prediction data 41.

In S103, the simulation unit 50 calculates a current failure rate using the cumulative damage 37 calculated in S102 and the failure probability function 32. When the failure probability function 32 with respect to a random variable x is set as F(x), a failure rate $\lambda(x)$ can be expressed by (Equation 1).

[Math. 1]

$$\lambda(x) = \frac{f(x)}{1 - F(x)} \quad \cdots \text{(Equation 1)}$$

Here, f(x) is a failure probability density function and is expressed by (Equation 2).

[Math. 2]

$$f(x) = \frac{\mathrm{d}F(x)}{\mathrm{d}x} \quad \cdots \text{(Equation 2)}$$

Here, the failure rate indicates an expected value of the number of times of failures that occur while next unit damage is accumulated in a target that does not break down until the present time. Therefore, in order to use the failure rate in the simulation for each time step, it is necessary to convert the failure rate into the expected value of the number of times of failures that occur in the period t.

By multiplying the failure rate by the damage in the current period t, the expected value (hereinafter, referred to as a unit time failure rate) of the number of times of failures in the current period t is evaluated. The unit time failure rate takes a value of 0 or more, and when the unit time failure rate is 1.0 or more, it means that a failure occurs within a unit time.

In S104, the simulation unit 50 determines whether the preventive maintenance is to be executed in the current period t. When it is determined to be Yes in S104, the process proceeds to S107 after the preventive maintenance is executed, and when it is determined to be No in S104, the process proceeds to S105 without executing the preventive maintenance.

Specifically, determination processing of S104 is processing in which a value of the failure rate is determined in advance as an execution reference parameter 91 of the preventive maintenance before the simulation, and it is determined that the preventive maintenance is to be executed when the unit time failure rate exceeds the value.

Here, even when the failure rate reaches the execution reference parameter 91, it may be incapable of performing the preventive maintenance due to constraints of maintenance resources such as personnel or equipment. In this case, an actual problem can be reproduced more accurately by including conditions, other than the failure rate based on a maintenance task parameter 52, in the determination of S104.

In addition, it may be incapable of performing the preventive maintenance for a while after a next period t, such as at an off-duty time of a person in charge of maintenance. In this case, it is also effective to temporarily decrease the failure rate set as the execution reference parameter 91 so as to reflect a status, in which the preventive maintenance is performed more actively, in the simulation from a viewpoint of accuracy improvement.

In S105, the simulation unit 50 determines whether a failure occurs in the current period t. For example, here, it is preferable to adopt a Monte Carlo simulation method in which uniform random numbers from 0 to 1 are generated, and when values of the random numbers are equal to or smaller than the unit time failure rate, a failure is treated as occurring. Accordingly, a prediction can be obtained without performing a complicated formulation as long as there are calculation resources.

When it is determined to be Yes in S105, the process proceeds to S106, and when it is determined to be No in S105, the period t is incremented (t ← t + 1) in Sill, and the process proceeds to S108.

In S106, the simulation unit 50 determines whether post maintenance is executed in the current period t based on the maintenance task parameter 52. Since the post maintenance is normally performed immediately after a failure occurs, a method may be adopted in which S106 is omitted and the post maintenance is constantly performed after the failure occurs. However, the person in charge of maintenance may be incapable of performing the post maintenance immediately according to a condition such as a task time.

When it is determined to be Yes in S106, the process proceeds to S107 after the post maintenance is executed, and when it is determined to be No in S106, the process proceeds to S112 without executing the post maintenance.

In S112, the simulation unit 50 increments the period t (t ← t + 1), and determines whether the incremented new period t reaches an end time of a predetermined simulation period (S113). When it is determined to be Yes in S113, the process ends, and when it is determined to be No in S113, the process returns to S106.

In S107, the simulation unit 50 initializes the cumulative damage up to that time point to zero and increments the period t (t ← t + 1), which are taken as post processing after the preventive maintenance or the post maintenance is executed.

In S108, the simulation unit 50 determines whether the incremented new period t reaches the end time of the predetermined simulation period. When it is determined to be Yes in S108, the simulation ends and the process proceeds to S121, and when it is determined to be No in S108, the process returns to S102.

In S121, the simulation unit 50 outputs simulation result data 51 obtained by the simulation to a display device, which serves as the input and output device 916 such as a display, via the display control unit 80 (output result).

The simulation result data 51 is, for example, at least one of the following data. Therefore, the simulation unit 50 can predict, for example, a downtime.

·Failure occurrence time
·Number of times of failure occurrences
·Preventive maintenance occurrence time
·Number of times of occurrences of preventive maintenance
·Stop time (downtime) of device

The simulation unit 50 determines the failure occurrence by the Monte Carlo simulation using the random numbers described in S105, and the simulation result data 51 is different for each execution. Therefore, it is desirable to perform a plurality of simulations based on the same input information and then acquire output information as values having a variation. Accordingly, a predicted value of the number of times of failure occurrences or the number of times of preventive maintenance can be obtained with an uncertainty included in the predicted value.

As described above, a method for setting the single execution reference parameter 91 and simulating the number of times of failure occurrences and the like at that time is shown. In FIG. 3, it is assumed that both the preventive maintenance and the post maintenance can be completed in a certain period t = 1 minute.

Alternatively, a method may be adopted in which a time (maintenance execution time) actually required for the preventive maintenance or the post maintenance is respectively set, and a time step to be incremented in S107 is changed according to the maintenance execution times. At this time, these maintenance execution times can be included in the downtime in S121.

Embodiment 2

FIG. 5 is a configuration diagram of the maintenance strategy presentation device 1 according to Embodiment 2.

The maintenance strategy presentation device 1 includes, as processing units, newly added evaluation index calculation unit 60 and optimization calculation unit 70 in addition to the input condition setting unit 20, the life model generation unit 30, the damage prediction generation unit 40, the simulation unit 50, and the display control unit 80 that are shown in FIG. 1.

A storage unit of the maintenance strategy presentation device 1 stores the maintenance cost data 65 and the optimization parameter 90 in addition to the database 10 shown in FIG. 1.

In Embodiment 2, the simulation result data 51 according to Embodiment 1 is used to perform optimization so as to obtain the appropriate execution reference parameter 91. That is, in Embodiment 2, the execution reference parameter 91 shown in FIG. 1 is treated as the optimization parameter 90.

The evaluation index calculation unit 60 receives the simulation result data 51 according to Embodiment 1 and calculates evaluation index data 61. Here, it is desirable to use an operation cost C expressed by (Equation 3) in calculation of the evaluation index data 61.

[Math. 3]

$$C = C_p N_p + C_b N_b + C_d T_d \quad \cdots \text{(Equation 3)}$$

Here, Np is the number of times of occurrences of preventive maintenance, Nb is the number of times of occurrences of post maintenance, Td is a downtime, Cp is a cost per time of preventive maintenance, Cb is a cost per time of post maintenance, and Cd is an opportunity loss per unit time of downtime.

Cp and Cb are registered in advance as the maintenance cost data 65.

As described in Embodiment 1, the simulation unit 50 adopts the Monte Carlo simulation using random numbers. Therefore, even when the same execution reference parameter 91 is used, a value of the operation cost obtained by evaluation index calculation is different for each simulation case.

In Embodiment 2, the simulation unit 50 also performs a plurality of simulations using the same execution reference parameter 91. The evaluation index calculation unit 60 obtains the operation cost based on output information obtained based on the simulations respectively.

In a normal case, the optimization calculation unit 70 causes the simulation unit 50 to repeatedly execute simulations while changing the execution reference parameter 91 in accordance with a maintenance strategy set to minimize the operation cost C. Accordingly, the optimization calculation unit 70 can obtain the execution reference parameter 91 that is finally optimized.

It is desirable that the optimization calculation unit 70 adopts an optimization algorithm that minimizes a statistical value such as an average value or a median value of the operation cost. It is noted that the optimization calculation unit 70 does not limit the optimization algorithm to be adopted.

For example, when a calculation amount of one simulation is relatively small, the optimization calculation unit 70 may appropriately divide the execution reference parameter 91 into parameters between 0 and 1, perform a comprehensive simulation on each parameter, and adopt a round-robin calculation in which the operation cost is minimum.

When the calculation amount of one simulation is large and the round-robin calculation is difficult, the optimization calculation unit 70 can optimize the execution reference parameter 91 with a small calculation amount by adopting an optimization algorithm such as a gradient method.

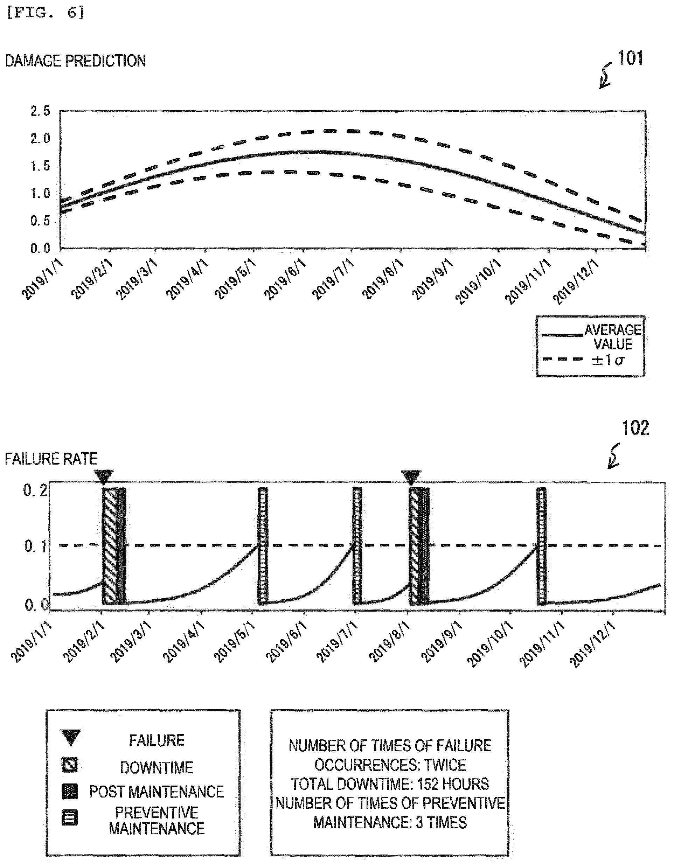

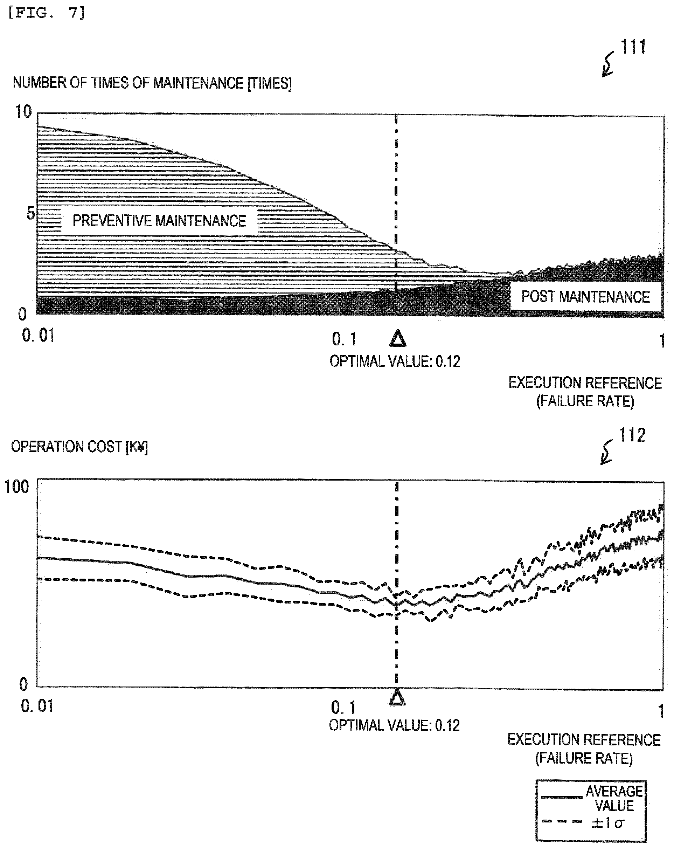

In addition to the simulation result data 51 according to Embodiment 1, the display control unit 80 outputs, to a display device, the optimization strategy information 81 including a prediction evaluation index (operation cost C or the like) used by the evaluation index calculation unit 60 and the optimization strategy information 71 (execution reference parameter 91) optimized by the optimization calculation unit 70 (see FIGS. 6 and 7 for details).

Accordingly, a user specifically understands the simulation result data 51 via a graphical user interface and intuitively interprets a basis for the optimal execution reference parameter 91.

FIG. 6 is a time-series display example in one of simulation cases in which the simulation is performed a plurality of times.

A reference numeral 101 indicates input data to the simulation unit 50, and denotes a display example of damage prediction in a simulation period set as a precondition of the simulation.

A reference numeral 102 indicates as the simulation result data 51 to denote a display example simultaneously showing a change in a failure rate of a target in the simulation period, and occurrence statuses of a failure, a downtime, the post maintenance, and the preventive maintenance. Horizontal wavy lines of the failure rate = 0.1 indicate the execution reference parameter 91 in which the preventive maintenance is performed when the failure rate = 0.1 is reached.

The display control unit 80 may display the damage prediction denoted by the reference numeral 101 and the occurrence statuses of maintenance denoted by the reference numeral 102 side by side in a vertical direction on the same screen as shown in FIG. 6. Accordingly, it is possible to allow a maintenance worker to understand, before maintenance work, a relationship between a damage accumulation status indicated by an operation status of a device and statuses of failure and maintenance.

FIG. 7 is a display example of the optimization strategy information 81 in which simulation results obtained by performing a plurality of simulations while changing the execution reference parameter 91 are aggregated.

A reference numeral 111 denotes a display example of the number of times of preventive maintenance and the number of times of post maintenance when a horizontal axis represents the execution reference parameter 91. Here, the execution reference parameter 91 is defined as a failure rate. A smaller value of the failure rate leads to preventive maintenance performed in a more active manner. On the contrary, a larger value of the failure rate means that the preventive maintenance is not actively performed and the device is made to continuously operate until a failure occurs.

For example, vertical wavy lines shown at a position of an optimal value of 0.12 in FIG. 7 indicate a distribution that the number of times of preventive maintenance is 2.2 times, which is slightly larger than the number of times of post maintenance as 1.8 times. In order to implement this distribution, a maintenance strategy is planned so as to perform the preventive maintenance when the failure rate of each component exceeds 0.12.

A reference numeral 112 denotes a display example of the operation cost when costs per time of preventive maintenance and post maintenance are taken into consideration. The display control unit 80 simultaneously displays (side by side in the vertical direction on the same screen) a ratio of the number of times of occurrences of preventive maintenance to the number of times of occurrences of post maintenance as shown by the reference numeral 111, and a sum of the operation costs of both the preventive maintenance and the post maintenance as shown by the reference numeral 112.

Accordingly, the maintenance worker can easily understand that "the optimal value of the failure rate = 0.12" as the execution reference parameter 91 is a proper value that can minimize a total operation cost. In addition, the maintenance worker intuitively reads, from a graph, a degree of variation (robustness) with respect to a key performance indicator (KPI) such as the operation cost.

Embodiment 3

FIG. 8 is a configuration diagram of the maintenance strategy presentation device 1 according to Embodiment 3.
In Embodiment 2, the damage prediction generation unit 40 calculates the unit time damage prediction data 41 based on the operation prediction data 21.
In Embodiment 3, the damage prediction generation unit 40 calculates the unit time damage prediction data 41 based on operation plan data 92 by using the operation plan data 92 instead of the operation prediction data 21. The operation plan data 92 can be acquired as the optimization parameter 90 when an operation state of the device can be controlled. It is preferable that, the optimization calculation unit 70 also optimizes, together with the execution reference parameter 91, the operation plan data 92 as the optimization parameter 90.
The operation plan data 92 corresponds to, for example, a production plan of a product in each period when a relationship between damage to a certain device and a production amount of the product is clear in the life model generation unit 30 in a production line. When a problem of optimizing an operation strategy here is treated as a problem of simply minimizing the operation cost, there is a concern about leading to a strategy that causes the production amount of the product to be zero.
To avoid this concern, a balance B shown in (Equation 4) is set as an objective function, which is used as the objective function of the optimization calculation unit 70. The optimization calculation unit 70 simultaneously optimizes the execution reference parameter 91 and the operation plan data 92 so as to maximize the objective function.
[Math. 4]

$$B = I - \left( C_p N_p + C_b N_b + C_d T_d \right) \quad \cdots \text{(Equation 4)}$$

Here, I is an income in the simulation period obtained by an operation of the device. At this time, an optimized calculation X is required to solve a multivariate optimization problem, and thus it is preferable that the optimization calculation unit 70 uses metaheuristics such as a genetic algorithm or particle swarm optimization.
In the present embodiments described above, the life model generation unit 30 obtains the life model (the damage model 31 and the failure probability function 32) based on the time-series operation data 11 and the failure maintenance event data 12. The simulation unit 50 uses the life model to execute the simulation, and sets the simulation result as the simulation result data 51. The simulation result data 51 includes an estimation result of the number of times of occurrences of failure and maintenance in any period.
The optimization calculation unit 70 refers to the simulation result data 51 and sets a determination reference (the execution reference parameter 91) regarding whether the preventive maintenance is to be performed as a quantitative value of a failure probability or a failure rate.
Accordingly, it is possible to execute a simulation of a highly accurate maintenance plan according to an operation status of each component without performing a trial in an actual operation.
The invention is not limited to the embodiments described above, and includes various modifications. For example, the above embodiments are described in detail for better understanding of the invention, and the invention is not necessarily limited to those including all configurations described above.

A part of a configuration of one embodiment can be replaced with a configuration of another embodiment, and the configuration of another embodiment can be added to the configuration of the one embodiment.

Further, a part of the configuration of each embodiment may be added, deleted, or replaced with another configuration. A part or all of the above configurations, functions, processing units, processing methods, and the like may be implemented by hardware, for example, by designing an integrated circuit.

The above configurations, functions, and the like may be implemented by software by interpreting and executing a program for implementing respective functions by a processor.

Information such as a program, a table, or a file for implementing the functions can be stored in a recording device such as a memory, a hard disk, or a solid state drive (SSD), or in a recording medium such as an integrated circuit (IC) card, an SD card, and a digital versatile disc (DVD). Further, it is also possible to utilize cloud.

Control lines or information lines are considered to be necessary for description, and not all control lines or information lines are necessarily shown in a product. Actually, it may also be considered that almost all the configurations are connected to one another.

Further, a communication unit that connects devices is not limited to a wireless LAN, and may be changed to a wired LAN or other communication units.

Reference Signs List

| | |
|---|---|
| 1: | maintenance strategy presentation device (maintenance simulation apparatus) |
| 10: | database |
| 11: | time-series operation data |
| 12: | failure maintenance event data |
| 20: | input condition setting unit |
| 21: | operation prediction data |
| 30: | life model generation unit |
| 31: | damage model (life model) |
| 32: | failure probability function (life model) |
| 40: | damage prediction generation unit |
| 41: | unit time damage prediction data |
| 50: | simulation unit |
| 51: | simulation result data |
| 52: | maintenance task parameter |
| 60: | evaluation index calculation unit |
| 61: | evaluation index data |
| 65: | maintenance cost data |
| 70: | optimization calculation unit |
| 71: | optimization strategy information |
| 72: | new parameter |
| 80: | display control unit |
| 81: | optimization strategy information |
| 90: | optimization parameter |
| 91: | execution reference parameter |
| 92: | operation plan data |

## Claims

1. A maintenance simulation apparatus comprising:

a simulation unit configured to calculate a current reliability index by inputting a cumulative damage obtained based on a predicted value of operation data of a maintenance object to a life model defining a reliability index for each cumulative damage of the maintenance object, and determine, in each period, whether preventive maintenance is to be executed in the current reliability index according to a magnitude relationship between the current reliability index and a reliability index of an execution reference parameter;

an optimization calculation unit configured to evaluate simulation result data output by the simulation unit using a predetermined evaluation index, and update the execution reference parameter so as to optimize an evaluation result of the simulation result data; and

a display control unit configured to display the simulation result data or the evaluation result of the simulation result data on a display device.

2. The maintenance simulation apparatus according to claim 1, wherein
the simulation unit uses, as the reliability index, a failure rate indicating a ratio in which a device, which does not break down until a present time, breaks down within a next unit time, or a cumulative failure probability indicating a probability in which a device breaks down until a present time.

3. The maintenance simulation apparatus according to claim 1, wherein
the simulation unit outputs, as the simulation result data, a stop time of a device caused by a failure occurrence and an execution of maintenance of the device.

4. The maintenance simulation apparatus according to claim 1, wherein
the simulation unit receives the cumulative damage obtained based on the predicted value of the operation data of the maintenance object which is calculated based on operation plan data including uncertainty information.

5. The maintenance simulation apparatus according to claim 4, wherein
the optimization calculation unit also sets the operation plan data, in addition to the execution reference parameter, as an optimization target.

6. The maintenance simulation apparatus according to claim 1, wherein
the simulation unit calculates presence or absence of a failure occurrence and presence or absence of post maintenance associated with the failure occurrence in each period according to Monte Carlo simulation using a random number, and evaluates the post maintenance using the predetermined evaluation index at a higher cost than that of the preventive maintenance.

7. The maintenance simulation apparatus according to claim 6, wherein
the display control unit displays, as the simulation result data, damage prediction data for a device and an occurrence time for each of preventive maintenance and post maintenance side by side in the same time series.

8. The maintenance simulation apparatus according to claim 6, wherein
the display control unit displays, as the simulation result data, a graph indicating the number of times of preventive maintenance and the number of times of post maintenance for each reliability index and also including the reliability index of the execution reference parameter after optimization, and displays side by side, as the evaluation result of the simulation result data, a graph indicating an operation cost for each reliability index.

9. A maintenance simulation method using a maintenance simulation apparatus including a simulation unit, an optimization calculation unit, and a display control unit, the maintenance simulation method comprising:

the simulation unit calculating a current reliability index by inputting a cumulative damage obtained based on a predicted value of operation data of a maintenance object to a life model defining a reliability index for each cumulative damage of the maintenance object, and determining, in each period, whether preventive maintenance is to be executed in the current reliability index according to a magnitude relationship between the current reliability index and a reliability index of an execution reference parameter;

the optimization calculation unit evaluating, using a predetermined evaluation index, simulation result data output by the simulation unit, and updating the execution reference parameter so as to optimize an evaluation result of the simulation result data; and

the display control unit displaying the simulation result data or the evaluation result of the simulation result data on a display device.

[FIG. 1]

[FIG. 2]

[FIG. 3]

FAILURE PROBABILITY DENSITY

CUMULATIVE DAMAGE

[FIG. 4]

[FIG. 5]

[FIG. 6]

DAMAGE PREDICTION

101

| | AVERAGE VALUE |
| --- | --- |
| | ±1σ |

102

FAILURE RATE

| ▼ | FAILURE |
| --- | --- |
| ◪ | DOWNTIME |
| ▦ | POST MAINTENANCE |
| ▤ | PREVENTIVE MAINTENANCE |

NUMBER OF TIMES OF FAILURE OCCURRENCES: TWICE
TOTAL DOWNTIME: 152 HOURS
NUMBER OF TIMES OF PREVENTIVE MAINTENANCE: 3 TIMES

[FIG. 7]

NUMBER OF TIMES OF MAINTENANCE [TIMES]

111

PREVENTIVE MAINTENANCE

POST MAINTENANCE

OPTIMAL VALUE: 0.12

EXECUTION REFERENCE
(FAILURE RATE)

OPERATION COST [K¥]

112

OPTIMAL VALUE: 0.12

EXECUTION REFERENCE
(FAILURE RATE)

AVERAGE
VALUE
±1 σ

[FIG. 8]

## INTERNATIONAL SEARCH REPORT

International application No.

PCT/JP2021/023510

**A. CLASSIFICATION OF SUBJECT MATTER**

Int. Cl. G06Q10/00(2012.01)i, G05B23/02(2006.01)i, G06Q10/04(2012.01)i
FI: G06Q10/00 300, G06Q10/04, G05B23/02 G

According to International Patent Classification (IPC) or to both national classification and IPC

**B. FIELDS SEARCHED**

Minimum documentation searched (classification system followed by classification symbols)
Int. Cl. G06Q10/00-99/00, G05B23/02, G06Q10/04

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/176315 A1 (HITACHI, LTD.) 19 September 2019 (2019-09-19), entire text, all drawings | 1-9 |
| A | JP 2005-182465 A (TOSHIBA CORP.) 07 July 2005 (2005-07-07), entire text, all drawings | 1-9 |
| A | 凌元錦．自己診断機能を持つ安全保護系の数理モデル．計測自動制御学会論文集．31 March 2005, vol. 41, no. 3, pp. 259-267, ISSN: 0453-4654, entire text, all drawings, (LING, Yuanjin et al. A Mathematical Model of Protective System with Self-Diagnosis. Transactions of the Society of Instrument and Control Engineers.) | 1-9 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04.08.2021 | 17.08.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/023510

| Patent Documents referred to in the Report | Publication Date | Patent Family | Publication Date |
|---|---|---|---|
| WO 2019/176315 A1 | 19.09.2019 | (Family: none) | |
| JP 2005-182465 A | 07.07.2005 | US 2005/0149570 A1 entire text, all drawings EP 1544771 A1 CN 1629867 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019160128 A

- JP 2004323162 A

**Non-patent literature cited in the description**

- **YOSUKE UEKI et al.** Lifetime modelling for mechanical equipment by utilizing time-series data based-on the damage-based survival analysis (A trial for applying the model to the equipment in a chemical plant). *Transactions of the Japan Society of Mechanical Engineers,* 2020, vol. 86 (886), 20-00042